# EUROPÄISCHE PATENTSCHRIFT

(11) **EP 1 794 619 B1**
(45) Veröffentlichungstag und Bekanntmachung des Hinweises auf die Patenterteilung: **26.03.2014**
(21) Anmeldenummer: 05789501.3
(22) Anmeldetag: 28.09.2005
(51) Int. Cl.: G01S 17/02, G01S 17/06, G01S 17/89, G01S 17/93

(54) **VORRICHTUNG ZUR OPTISCHEN ÜBERWACHUNG VON RAUMBEREICHEN**
DEVICE FOR OPTICALLY MONITORING SPATIAL AREAS
DISPOSITIF DE SURVEILLANCE OPTIQUE DE ZONES TRIDIMENSIONNELLES

(30) Priorität: 28.09.2004 DE 102004047022
(43) Veröffentlichungstag der Anmeldung: 13.06.2007
(73) Patentinhaber: Odos imaging Ltd, Edinburgh EH9 3JF (GB)
(72) Erfinder: DOEMENS, Günter, 83607 Holzkirchen (DE); MENGEL, Peter, 82223 Eichenau (DE); STOCKMANN, Michael, 83052 Bruckmühl (DE)
(74) Vertreter: Fischer, Ernst
(86) Internationale Anmeldenummer: PCT/EP2005/054862
(87) Internationale Veröffentlichungsnummer: WO 2006/035035

(56) Entgegenhaltungen:
- EP-A- 1 312 936
- WO-A-00/55642
- DE-A1- 3 741 195
- DE-A1- 10 313 194
- DE-C1- 4 405 376
- US-A- 5 784 023

## Beschreibung

Die Erfindung betrifft eine Vorrichtung zur Überwachung von Raumbereichen mit einem Strahlungspulse aussendenden Sender und einem Empfänger, dem über eine im Strahlengang vor dem Empfänger angeordnete Optik ein Gesichtsfeld zugeordnet ist und der die vom Sender in das Gesichtsfeld ausgesandten Strahlungspulse empfängt, sowie mit einer mit dem Empfänger und dem Sender verbundenen Auswerteeinheit, die der Bestimmung der Laufzeit der Strahlungspulse dient.

Eine derartige Vorrichtung ist aus der DE 101 63 534 A1 bekannt. Die bekannte Überwachungsvorrichtung für Raumbereiche weist Sender auf, die Strahlungspulse aussenden, die von Objekten in den zu überwachenden Raumbereichen zu Empfängern zurückgeworfen werden. Die Empfänger sind an eine Laufzeitbestimmungseinheit angeschlossen, mit deren Hilfe ein Entfernungsbild eines Objekts in den Raumbereichen erstellt werden kann. Die Auswahleinheit wertet die Entfernungsbilder aus und erzeugt an einem Ausgang ein Detektionssignal, wenn in den Entfernungsbildern vorbestimmte Entfernungswerte auftreten.

Die bekannte Vorrichtung zur Überwachung von Raumbereichen eignet sich insbesondere zur Installation von Lichtvorhängen, wobei auf den Einsatz von Lichtschranken verzichtet werden kann. Da die Empfänger als Sensorzeile in einen Halbleiterchip integriert werden können, ist es möglich, von nahezu einem einzelnen Punkt im Raum Lichtvorhänge aufzuspannen, die sich über mehrere Meter hinweg erstrecken. Dementsprechend kostengünstig ist die Montage der bekannten Vorrichtung zur Überwachung von Raumbereichen, da lediglich eine Installation an einem einzelnen Ort erforderlich ist.

Da die bekannte Vorrichtung zur Überwachung von Raumbereichen nicht nur das Vorhandensein eines Objekts im zu überwachenden Raumbereich, sondern auch Informationen zur Entfernung von Objekten liefert, die sich im Lichtvorhang befinden, kann die Falschalarmrate wesentlich gesenkt werden, da Störeinflüsse durch Verschmutzung und Fremdpartikel, zum Beispiel Insekten, oder Fremdlicht wirksam unterdrückt werden können.

Auch mit der bekannten Vorrichtung bleibt die Detektion von Objekten auf eine entlang einer geraden Grundlinie verlaufende Fläche begrenzt. Bei vielen Überwachungsaufgaben wäre es jedoch von Vorteil, wenn der Lichtvorhang entlang einer gekrümmten Grundlinie, zum Beispiel entlang einer kreis- oder halbkreisförmigen Grundlinie verlaufen könnte. Die Abgrenzung des Überwachungsraums wäre dadurch wesentlich einfacher. Denn diese Aufgabe kann zwar auch durch mit den bekannten Vorrichtung zur Überwachung von Raumbereichen gelöst werden, indem mehrere sich schneidende Lichtvorhänge installiert werden, aber dadurch erhöht sich der Installationsaufwand beträchtlich.

Ein höherer Aufwand muss auch dann betrieben werden, wenn die Bewegungsrichtung und Geschwindigkeit von Objekten erfasst werden soll. Zu diesem Zweck sind immer mehrere der bekannten Lichtvorhänge erforderlich.

In GB 2 381 684 A ist eine optische Abstandsmess-apparatur beschrieben, bei der Licht von vertikalen Linien mittels einer Zylinderlinse auf eine Photodiodenzeile fokussiert wird, wobei die Zylinderachse der Zylinderlinse senkrecht zu der Photodiodenzeile angeordnet ist.

Ausgehend von diesem Stand der Technik liegt der Erfindung die Aufgabe zugrunde, eine Vorrichtung zur Überwachung von Raumbereichen zu schaffen, mit der sich komplexe Raumbereiche überwachen lassen, wobei das Signal-zu-Rausch-Verhältnis erhöht ist.

Diese Aufgabe wird durch eine Vorrichtung mit den Merkmalen des unabhängigen Anspruchs gelöst. In davon abhängigen Ansprüchen sind vorteilhafte Ausgestaltungen und Weiterbildungen angegeben.

Die Vorrichtung zur Überwachung von Raumbereichen weist einen Empfänger auf, dem über eine Optik ein Gesichtsfeld zugeordnet ist. Ferner verfügt die Vorrichtung über einen Sender, der das Gesichtsfeld mit Strahlungspulsbündeln beaufschlagt, die das Gesichtsfeld jeweils nur teilweise abdecken. Das Gesichtfeld wird somit mit Hilfe der Strahlungspulsbündel abgetastet, wobei der Auswerteeinheit bei der Bestimmung der Laufzeit der Strahlungspulsbündel Informationen über die Richtung des jeweiligen Strahlungspulsbündels zur Verfügung stehen, so dass aus den gemessenen Entfernungswerten ein Entfernungsbild eines erfassten Objekts rekonstruiert werden kann.

Unter Strahlungspulsbündel soll in diesem Zusammenhang ein gepulster oder sonst auf irgendeine Weise modulierter Strahl mit beliebigem Öffnungswinkel verstanden werden, der nur einen Teil des Gesichtsfelds, insbesondere weniger als drei Viertel, vorzugsweise weniger als die Hälfte des Gesichtsfelds abdeckt.

Da die Richtung der Strahlungspulsbündel innerhalb des Gesichtsfelds nahezu beliebig gewählt werden kann, können mit der Vorrichtung zur Überwachung von Raumbereichen Lichtvorhänge mit komplexer Geometrie bewerkstelligt werden. Insbesondere ist es auch möglich, mit der Vorrichtung zur Überwachung von Raumbereichen hintereinander angeordnete Lichtvorhänge auszubilden, mit denen sich Informationen über die Richtung und die Geschwindigkeit der Bewegung von Objekten gewinnen lassen. Da sich ferner die Richtung der Strahlungspulsbündel mit geringem technischen Aufwand auch nach einer Installation der Vorrichtung verändern lässt, können die Lichtvorhänge flexibel an die jeweilige Situation angepasst werden. Vorteilhaft ist ferner auch, dass nur ein Ausschnitt des Gesichtsfeldes mit Strahlung beaufschlagt wird. Im Vergleich zum Stand der Technik, bei dem das gesamte Gesichtsfeld des Empfängers ausgeleuchtet wird, kann daher ein Sender mit geringerer Strahlungsleistung gewählt werden. Weiter von Vorteil ist, dass für die Vorrichtung zur Überwachung von Raumbereichen keine komplexen Empfänger benötigt werden. Grundsätzlich genügt für die Vorrichtung zur Überwachung von Raumbereichen ein Empfänger mit ein einzigen Reihe von nebeneinander angeordneten Sensorelementen.

Dementsprechend weist die Erfindung ein Gesichtsfeld auf, das in eine Vielzahl von Gesichtsfeldsegmenten unterteilt ist, die jeweils einem Sensorelement des Empfängers zugeordnet sind. Die in den einzelnen Gesichtsfeldsegmenten erfassten Strahlungspulsbündel können von den einzelnen Sensorelementen des Empfängers parallel aufgenommen und verarbeitet werden. Diese Ausführungsform zeichnet sich daher durch eine besonders hohe Zeitauflösung aus.

Bei einer weiteren bevorzugten Ausführungsform werden die einzelnen Gesichtsfeldsegmente sequentiell an unterschiedlichen Orten mit Strahlungspulsbündeln beaufschlagt. Mit dieser Ausführungsform kann ein Raumvolumen systematisch mit hoher Ortsauflösung abgetastet werden.

Daneben ist es auch möglich, die einzelnen Gesichtsfeldsegmente gleichzeitig mit gegeneinander versetzten Strahlungspulsbündeln zu beaufschlagen. Bei dieser Ausführungsform ist zwar die Ortsauflösung niedrig, aber dafür lassen sich Veränderungen des zu erfassenden Objekts in kurzen Zeitabständen erfassen.

Erfindungsgemäß ist der Empfänger eine Sensorzeile mit einer Vielzahl von nebeneinander angeordneten Sensorelementen, denen im Gesichtsfeld jeweils nebeneinander liegende Gesichtsfeldstreifen zugeordnet sind. Diese Gesichtfeldstreifen kommen durch eine anamorphotische Abbildung des Gesichtsfeldes auf die Sensorelemente zustande. Diese Ausführungsform bietet den Vorteil, dass das Signal-zu-Rausch-Verhältnis günstig ist, da jedes Sensorelement nur die in den jeweiligen Gesichtsfeldstreifen einfallende Strahlung empfängt, so dass das Hintergrundrauschen niedrig bleibt.

Je nach Ausführungsform können die Gesichtsfeldstreifen sequentiell mit unterschiedlich ausgerichteten Strahlungspulsbündeln, die sich über die Gesichtsfeldstreifen erstrecken, oder gleichzeitig mit einer Vielzahl verschiedener, in den einzelnen Gesichtsfeldstreifen versetzt angeordneten Strahlungspulsbündeln beaufschlagt werden.

Derartige Ausführungsformen erlauben Veränderungen eines sich im Gesichtsfeld befindenden Objekts mit kurzen Zeitintervallen zu erfassen und eignen sich daher für den Kollisionsschutz von fahrerlosen Transportfahrzeugen.

Darüber hinaus eignen sich diese Ausführungsformen auch dazu, bei mit Fahrern besetzten Fahrzeugen Unfallsituationen frühzeitig zu erfassen und ermöglichen so, frühzeitig Gegenmaßnahmen zu treffen.

Weitere Vorteile und Eigenschaften der vorliegenden Erfindung gehen aus der nachfolgenden Beschreibung hervor, in der Ausführungsbeispiele der Erfindung im Einzelnen anhand der beigefügten Zeichnung erläutert werden. Es zeigen:
- Figur 1: eine perspektivische Ansicht des Aufbaus einer Überwachungsvorrichtung;
- Figur 2: eine Darstellung eines mit Strahlungspulsbündeln beaufschlagten Gesichtsfelds;
- Figur 3: eine Darstellung eines weiteren mit Strahlungspulsbündeln beaufschlagten Gesichtsfelds;
- Figur 4: eine perspektivische Darstellung des Einsatzes der Vorrichtung als Türöffner;
- Figur 5: die Darstellung eines weiteren Gesichtsfelds, das mit Strahlungspulsbündeln beaufschlagt wird;
- Figur 6: eine perspektivische Darstellung des Einsatzes der Vorrichtung für den Kollisionsschutz eines fahrerlosen Fahrzeugs;
- Figur 7: eine Seitenansicht des Einsatzes der Vorrichtung für die Früherkennung von Unfällen von mit Fahrern besetzten Fahrzeugen; und
- Figur 8: eine Aufsicht auf das Gesichtsfeld und die Ausrichtung der Strahlungspulsbündel bei der Unfallfrüherkennung.

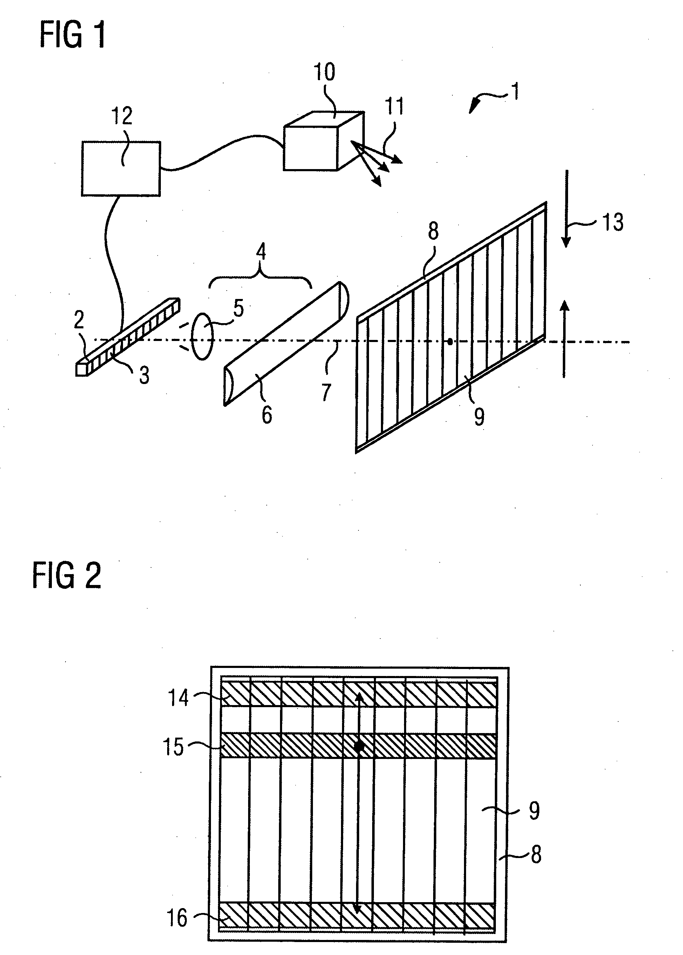

Figur 1 zeigt eine Überwachungsvorrichtung 1 zur Überwachung von Raumbereichen.

Die Überwachungsvorrichtung 1 verfügt über einen Empfänger 2, der eine Vielzahl von nebeneinander angeordneten Sensorelementen 3 aufweist. Vor den Sensorelementen 3 ist eine Optik 4 angeordnet, die in Figur 1 durch eine Sammellinse 5 und eine Zylinderlinse 6 angedeutet ist. Die Optik 4 definiert eine optische Achse 7 und ein Gesichtsfeld 8. Der Aufteilung des Empfängers 2 in unabhängige Sensorelemente 3 entsprechend ist das Gesichtsfeld 8 in Gesichtsfeldstreifen 9 unterteilt. Die Gesichtsfeldstreifen 9 sind jeweils die durch die Optik 4 objektseitig transformierten Sensorelemente 3. Da es sich bei der Optik 4 um eine anamorphotische Optik handelt, entsprechen den annähernd quadratischen Sensorelementen 3 die lang gestreckten Gesichtsfeldstreifen 9.

Die Überwachungsvorrichtung 1 verfügt ferner über einen Sender 10, der auf nachfolgend noch näher beschriebene Weise Strahlungspulsbündel 11 aussendet. Sowohl der Empfänger 2 als auch der Sender 10 sind mit einer Auswerteeinheit 12 verbunden.

Beim Betrieb der Überwachungsvorrichtung 1 sendet der Sender 10 die Strahlungspulsbündel 11 in das Gesichtsfeld 8. Die Strahlungspulsbündel 11 werden dort von einem in Figur 1 nicht dargestellten Objekt in Richtung der optischen Achse 7 zum Empfänger 2 zurückgeworfen und dort detektiert. Das von dem Empfänger 2 gelieferte Ausgangssignal wird von der Auswerteeinheit 12 ausgewertet. Die Auswerteeinheit 12 führt dabei eine Laufzeitbestimmung aus.

In groben Zügen erfolgt die Laufzeitbestimmung wie folgt: Nach dem Aussenden eines Strahlungspulsbündels 11 durch den Sender 10 veranlasst die Auswerteeinheit 12, dass die Sensorelemente 3 im Empfänger 2 aktiviert werden. Die Sensorelemente 3 umfassen jeweils eine Photodiode, die einen dem jeweiligen Sensorelement 3 zugeordneten Pixelkondensator entlädt. Nach einem vorbestimmten Zeitintervall wird das Sensorelement 3 deaktiviert. Die im Pixelkondensator verbliebene Restladung ist dann ein Maß für die von der Photodiode erfasste Lichtmenge oder Strahlungsenergie. Da die von der Photodiode erfasste Lichtmenge davon abhängt, welche Lichtmenge innerhalb der zeit, während der die Photodiode aktiviert ist, zu der Photodiode gelangt, ist die im Pixelkondensator verbliebene Restladung ein Maß für die Laufzeit T des Strahlungspulsbündels 11 vom Sender 10 zum Objekt und zurück zum Sensorelement 3. Die Entfernung des Objekts d ergibt sich dann näherungsweise aus der Formel d = c · T/2.

Die hier in den Grundzügen geschilderte Laufzeitbestimmung ist dem Fachmann auch unter der Bezeichnung Lichtlaufzeitmessung mit Kurzzeitintegration bekannt. Die dazu nötigen Empfänger werden üblicherweise in CMOS-Technik implementiert.

Im Folgenden werden nun die Besonderheiten der Überwachungsvorrichtung 1 im Einzelnen beschrieben: Das auf einen Gesichtsfeldstreifen 9 treffende Strahlungspulsbündel 11 kann von dem das Strahlungspulsbündel 11 zurückwerfenden Objekt zu dem Sensorelement 3 zurückgeworfen werden, das dem jeweiligen Gesichtsfeldstreifen 9 zugeordnet ist. Dies erfolgt unabhängig davon, wo das Strahlungspulsbündel 11 entlang dem Gesichtsfeldstreifen 9 auf das Objekt trifft. Das bedeutet, dass durch eine Änderung der Richtung des Strahlungspulsbündels 11 das Objekt entlang einem Gesichtsfeldstreifen 9 abgetastet werden kann und dass dabei das vom Objekt zurückgeworfene Licht jeweils zum zugeordneten Sensorelement 3 zurückgeworfen wird. Mit der Überwachungsvorrichtung 1 lassen sich daher auch von flächenmäßig ausgedehnten Objekten Entfernungsbilder aufnehmen, obwohl der Empfänger 2 nur eine Zeile von nebeneinander angeordneten Sensorelementen 3 aufweist. Durch die anamorphotische Optik 4 und das sequentielle Abtasten des Objekts mit Hilfe der Strahlungspulsbündel 11 erfolgt daher gewissermaßen eine Kompression 13 des Objekts auf die Zeile der Sensorelemente 3 des Empfängers 2.

In Figur 2 ist eine erste Möglichkeit der Abtastung des Gesichtsfelds 8 durch die Strahlungspulsbündel 11 dargestellt. Figur 2 zeigt eine Aufsicht auf das Gesichtsfeld 8, in das die Gesichtsfeldstreifen 9 eingezeichnet sind. Durch eine dem Sender 10 zugeordnete Spiegelvorrichtung kann dann ein sich über sämtliche Gesichtsfeldstreifen 9 erstreckendes Strahlungspulsbündel 11 entlang den Gesichtsfeldstreifen 9 über das Gesichtsfeld 8 verschoben werden. Beispielsweise kann das die Gesichtsfeldstreifen 9 überdeckende Strahlungspulsbündel 11 von einer Bündelposition 14 schrittweise zu einer Bündelposition 16 verschoben werden. Dabei werden jeweils Laufzeitbestimmungen durchgeführt und die gewonnenen Entfernungswerte dazu verwendet, eine in einem Speicher implementierte Bildmatrix zeilenweise zu füllen. Nach der abschließenden Messung an der Bündelposition 16 ist die Bildmatrix gefüllt und enthält ein vollständiges Entfernungsbild vom zu erfassenden Objekt. Die den einzelnen Matrixelementen zuzuordnenden Ortsinformationen ergeben sich aus der jeweiligen Bündelposition und dem Ort des jeweiligen Gesichtfeldstreifens 9.

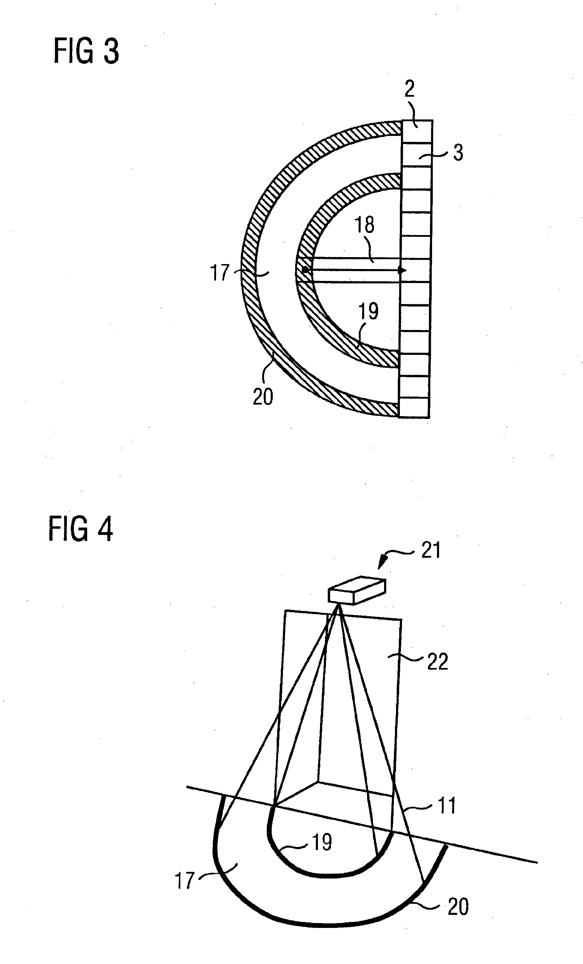

Bei der Gestaltung des Gesichtsfelds 8 können die jeweiligen Anforderungen der Verwendung der Überwachungsvorrichtung 1 berücksichtigt werden. Figur 3 zeigt beispielsweise ein Gesichtsfeld 17, das ringsegmentförmig beleuchtet wird. In Figur 3 sind sowohl ein einzelnes Gesichtsfeldsegment 18 als auch alternierende Bündelpositionen 19 und 20 dargestellt.

Um die Zuordnung der Gesichtsfeldsegmente 18 zu den Sensorelemente 3 zu veranschaulichen, sind in Figur 3 auch die Sensorelemente des Empfängers 2 eingezeichnet und die Zuordnung des eingezeichneten Gesichtsfeldsegments 18 zu einem Sensorelement 3 durch einen Pfeil angedeutet. Da sich die Bündelpositionen 19 und 20 ohne Lücken über sämtliche Gesichtsfeldsegmente 18 erstrecken, weist die Überwachung bei dem in Figur 3 dargestellten Fall eine hohe Ortsauflösung auf.

Gemäß Figur 4 kann das Gesichtsfeld 17 beispielsweise bei einer Überwachungsvorrichtung 21 zum Einsatz kommen, die zur Überwachung eines Durchgangs 22 eingesetzt wird. In diesem Fall befindet sich die Überwachungsvorrichtung 21 zweckmäßigerweise oberhalb des Durchgangs 22 und sendet kegelmantelförmige Strahlungspulsbündel 11 zu der Bündelposition 19 und der Bündelposition 20.

Mit Hilfe der Überwachungsvorrichtung 21 lässt sich nicht nur das Vorhandensein einer Person im Bereich des Durchgangs 22 feststellen, sondern auch deren Richtung und Geschwindigkeit. Denn mit Hilfe der Überwachungsvorrichtung 21 kann erfasst werden, zu welchem Zeitpunkt eine Person, die zunächst im Bereich der Bündelposition 19 in das Gesichtsfeld 17 tritt, die Bündelposition 20 erreicht. Aus der Zeitdifferenz und dem bekannten Abstand zwischen den Bündelpositionen 19 und 20 kann dann die Geschwindigkeit der Bewegung der Person bestimmt werden. Die Überwachungsvorrichtung 21 eignet sich daher insbesondere zur Steuerung von automatischen Türen. Denn bei einer Auswertung der Richtung und der Geschwindigkeit der Bewegung von Personen im Gesichtsfeld 17 kann verhindert werden, dass vor dem Durchgang 22 stehende oder sich vom Durchgang 22 entfernende Personen eine Öffnung der den Durchgang 22 verschließenden Türe auslösen.

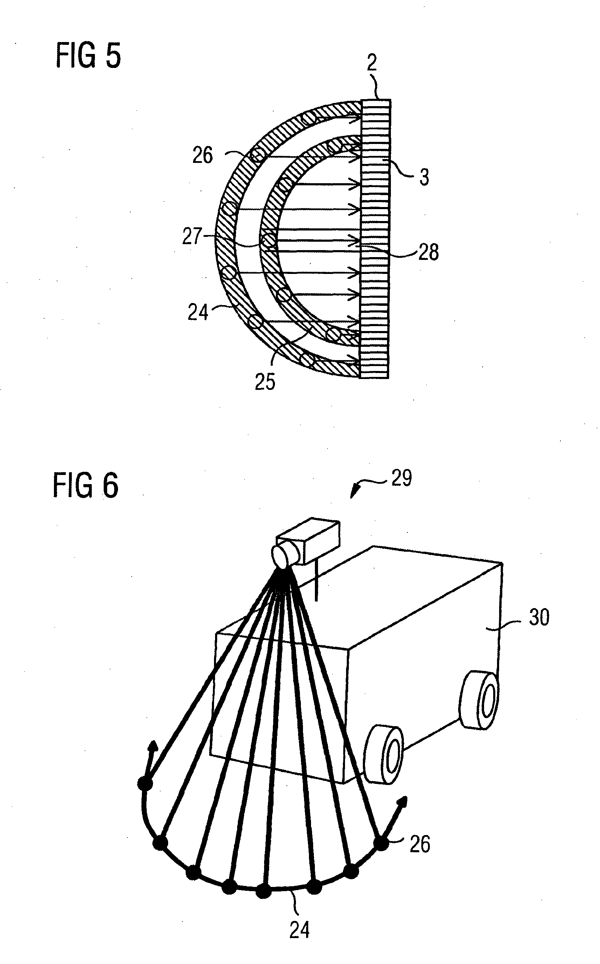

Figur 5 zeigt ein weiteres Gesichtsfeld, das ebenso wie das Gesichtsfeld 17 in Figur 3 ringsegment förmig beleuchtet ist. Am Rand des Gesichtsfelds befinden sich in zwei ebenfalls ringsegmentförmigen Bündelzonen 24 und 25 Bündelpositionen 26 und 27, die jeweils einem Gesichtsfeldsegment 28 zugeordnet sind. Die Strahlungspulsbündel 11 erstrecken sich daher in dem in Figur 5 dargestellten Fall nicht über mehrere Gesichtsfeldsegmente 28, sondern sind so über die äußere Bündelzone 24 und die innere Bündelzone 25 verteilt, dass jeweils eine Bündelposition 26 oder 27 in ein einzelnes Gesichtsfeldsegment 28 fällt.

Um die Zuordnung der Bündelposition 26 und 27 zu veranschaulichen, sind in Figur 5 die einzelnen Sensorelemente 3 des Empfängers 2 eingezeichnet und die Zuordnung der Bündelposition 26 und 27 zu den Sensorelementen 3 durch Pfeile veranschaulicht.

Die in Figur 5 dargestellte Gestaltung des Gesichtsfelds 23 und die Anordnung der Bündelposition 26 und 27 in den Bündelzonen 24 und 25 eignet sich insbesondere für den in Figur 6 dargestellten Fall, dass eine Überwachungsvorrichtung 29 dazu verwendet wird, einen Kollisionsschutz für ein Fahrzeug 30 zu bewerkstelligen. Bei dem Fahrzeug 30 kann es sich beispielsweise um ein fahrerloses Transportfahrzeug handeln. Bei dem in Figur 6 dargestellten Fall bildet die Überwachungsvorrichtung 29 einen Teil einer optischen Überwachungskamera.

Die Überwachungsvorrichtung 29 weist zwar eine geringere Ortsauflösung als die Überwachungsvorrichtung 21 aus Figur 4 auf, aber dafür ist die Zeitauflösung besser, da die Bündelposition 26 und 27 in den Bündelzonen 24 und 25 gleichzeitig überwacht werden können. Dadurch ist es möglich, kurzfristig auf das Auftauchen von Hindernissen im Fahrweg des Fahrzeugs 30 zu reagieren.

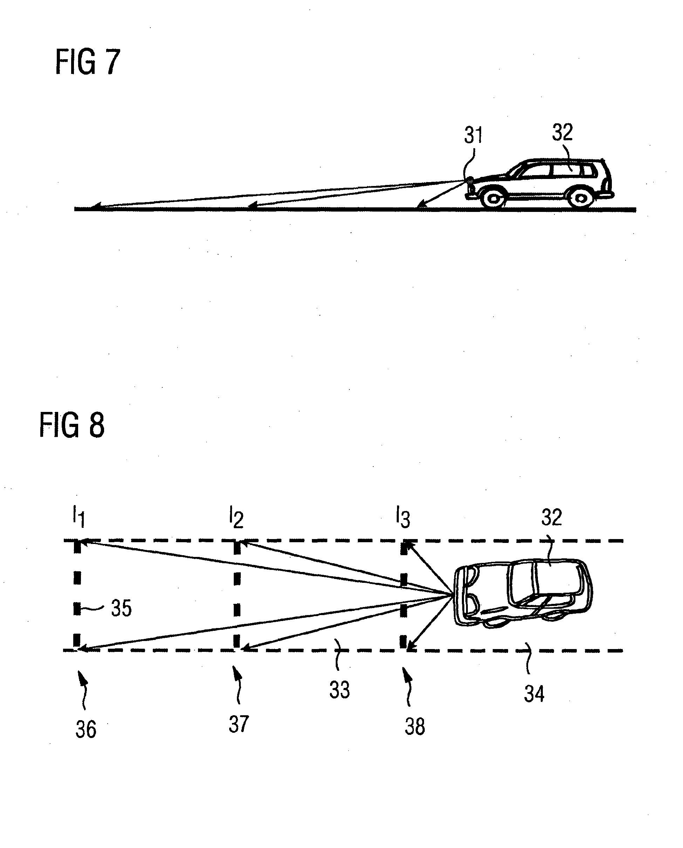

Figur 7 zeigt schließlich einen weiteren Anwendungsfall, bei dem eine Überwachungsvorrichtung 31 in ein mit einem Fahrer besetztes Kraftfahrzeug 32 integriert ist. Die Überwachungsvorrichtung 31 dient dazu, drohende Unfälle frühzeitig zu detektieren, und ermöglicht dadurch das frühzeitige Einleiten von Gegenmaßnahmen.

Bei dem in den Figuren 7 und 8 dargestellten Anwendungsfall erstreckt sich ein Gesichtsfeld 33 über einen Fahrweg 34 des Kraftfahrzeugs 32. Von der Überwachungsvorrichtung 31 werden dabei Strahlungspulsbündel sequentiell zu Bündelpositionen 35 gesendet, die beispielsweise in drei in unterschiedlichen Entfernungen angeordnete Bündelpositionsfolgen 36, 37 und 38 gruppiert sind. Die Intensität der Strahlungspulsbündel nimmt dabei mit zunehmendem Abstand vom Kraftfahrzeug 32 zu. Wenn also die am weitesten entfernte Bündelpositionsfolge 36 die Intensität I₁ aufweist, die mittlere Bündelpositionsfolge 37 die Intensität I₂ und die nächstliegende Bündelpositionsfolge 38 die Intensität I₃, gilt vorzugsweise: I₁ > I₂ > I₃.

Die hier beschriebenen Überwachungsvorrichtungen haben den gemeinsamen Vorteil, dass für den Aufbau keine Empfänger benötigt werden, bei denen die Sensorelemente nach Art eines Flächendetektors matrixförmig angeordnet sind. Vielmehr genügt für die Aufnahme von zweidimensionalen Entfernungsbildern ein Zeilendetektor mit einer einzelnen Reihe von nebeneinander angeordneten Sensorelementen.

## Patentansprüche

1. Vorrichtung zur Überwachung von Raumbereichen mit einem Strahlungspulsbündel (11) aussendenden Sender (10) und einem Empfänger (2), dem über eine im Strahlengang vor dem Empfänger (2) angeordnete Optik (4, 5, 6) ein Gesichtsfeld (8, 17, 23, 33) zugeordnet ist und der die vom Sender (10) in das Gesichtsfeld (8, 17, 23, 33) ausgesandten Strahlungspulsbündeln (11) empfangt, sowie mit einer mit dem Empfänger (2) und dem Sender (10) verbundenen Auswerteeinheit (12), die der Bestimmung der Laufzeit der Strahlungspulsbündeln (11) dient,
wobei der Sender (10) das Gesichtsfeld (8, 17, 23, 33) mit Strahlungspulsbündeln (11) beaufschlagt, die jeweils einen Teil des Gesichtsfelds (8, 17, 23, 33) abdecken,
wobei der Auswerteeinheit (12) bei der Bestimmung der Laufzeit der Strahlungspulsbündel (11) Informationen über die Richtung des jeweiligen Strahlungspulsbündels (11) zur Verfügung stehen, wobei der Empfänger (2) eine Sensorzeile mit einer einzigen Reihe von nebeneinander angeordneten Sensorelementen (3) aufweist, denen jeweils im Gesichtsfeld nebeneinander liegende Gesichtsfeldstreifen zugeordnet sind, und wobei die Optik (4, 5, 6) eine Zylinderlinse (6) aufweist,
**dadurch gekennzeichnet, dass**
die Zylinderachse der Zylinderlinse (6) parallel zu der Sensorzeile angeordnet ist, damit die Optik (4, 5, 6) das Gesichtsfeld (8, 17, 23, 33) anamorphotisch auf den Empfänger (2) transformiert und somit die in den einzelnen Gesichtsfeldstreifen erfasste Strahlung von dem jeweiligen Sensorelement des Empfängers aufgenommen wird, unabhängig davon, wo das Strahlungspulsbündel entlang dem Gesichtsfeldstreifen (9) auftrifft.

2. Vorrichtung nach Anspruch 1,
dadurch gekennzeichet, dass
der Sender (10) das Gesichtsfeld (8, 17, 33) sequentiell abtastet.

3. Vorrichtung nach Anspruch 2,
**dadurch gekennzeichnet, dass** der Sender eine Spiegelvorrichtung enthält, die dazu dient, die Strahlungspulsbündel (11) in unterschiedliche Richtungen auszusende.

4. Vorrichtung nach Anspruch 1,
**dadurch gekennzeichnet, dass**
der Sender (10) das Gesichtsfeld (23) gleichzeitig mit verschiedenen, in unterschiedliche Richtungen ausgesandten Strahlungspulsbündeln (11) abtastet.

5. Vorrichtung nach einem der Ansprüche 1 bis 4,
**dadurch gekennzeichnet, dass** die Strahlungspulsbündel (11) auf Ringsegmente des Gesichtsfelds (17, 23) gerichtet sind.

6. Vorrichtung nach einem der Ansprüche 1 bis 5,
**dadurch gekennzeichnet, dass**
die Strahlungspulsbündel (11) auf Ränder des Gesichtsfelds (17, 23) gerichtet sind.

7. Vorrichtung nach einem der Ansprüche 1 bis 6,
**dadurch gekennzeichnet, dass**
die Intensität der Strahlungspulsbündel (11) mit der Ausrichtung des Strahlungspulsbündel (11) variiert.

## Claims

1. Device for the surveillance of spatial areas with a sender (10) emitting radiation impulse bundles (11) and a receiver (2), to that is assigned a field of view (8, 17, 23, 33) via optics (4, 5, 6) arranged in the light path in front of the receiver (2) and that receives the radiation impulse bundles (11) sent in the field of view (8, 17, 23, 33) by the sender (10), as well as with an evaluation unit (12) connected with the receiver (2) and the sender (10), wherein the evaluation unit (12) serves for the determination of the time of flight of the radiation impulse bundles (11), wherein the sender (10) applies the field of view (8, 17, 23, 33) with radiation impulse bundles (11), that respectively cover a portion of the field of view (8, 17, 23, 33), wherein the evaluation unit (12) is provided with information about the direction of the respective radiation impulse bundle (11) during the determination of the time of flight of the radiation impulse bundles (11), wherein the receiver (2) comprises a sensor line with a single row of sensor elements (3) arranged adjacent to one another, to those are respectively assigned field of view stripes located adjacent to one another in the field of view, and wherein the optics (4, 5, 6) comprises a cylindrical lens (6),
**characterized in that**
the cylindrical axis of the cylindrical lens (6) is arranged parallel to the sensor line so that the optics (4, 5, 6) anamorphotically transform the field of view (8, 17, 23, 33) onto the receiver (2) and therefore the radiation captured in the single field of view stripes is recorded by the respective sensor element of the receiver, independently from where the radiation impulse bundle impinges along the field of view stripe (9).

2. Device according to claim 1,
**characterized in that**
the sender (10) scans sequentially the field of view (8, 17, 33).

3. Device according to claim 2,
**characterized in that**
the sender comprises a mirror device that serves to send the radiation impulse bundles (11) in different directions.

4. Device according to claim 1,
**characterized in that**
the sender (10) scans the field of view (23) simultaneously with various radiation impulse bundles (11) sent in different directions.

5. Device according to any one of claims 1 to 4,
**characterized in that**
the radiation impulse bundles (11) are directed to annular segments of the field of view (17, 23).

6. Device according to any one of claims 1 to 5,
**characterized in that**
the radiation impulse bundles (11) are directed to edges of the field of view (17, 23).

7. Device according to any one of claims 1 to 6,
**characterized in that**
the intensity of the radiation impulse bundles (11) varies with the orientation of the radiation impulse bundles (11).

## Revendications

1. Dispositif de surveillance de zones tridimensionnelles par impulsion de faisceaux à rayonnement (11) à partir d'un émetteur (10), comprenant un récepteur (2) associé à un système optique (4, 5.6) possédant un champ de vision (8, 17, 23, 33) et recevant l'impulsion des faisceaux à rayonnement (11) émise par l'émetteur (10) dans le champ de vision (8, 17, 23, 33), le récepteur (2) et l'émetteur (10) étant reliés à un boitier d'évaluation (12) permettant de déterminer la durée de l'impulsion des faisceaux à rayonnement (11), l'émetteur (10) d'impulsion de faisceaux à rayonnement (11) étant appliqué au champ de vision (8, 17, 23, 33) de manière à ce que chacun des faisceaux couvre une partie du champ de vision (8, 17, 23, 33), l'unité d'évaluation (12) permettant d'obtenir des informations au moment de la détermination de la durée de l'impulsion des faisceaux à rayonnement (11) telles que la direction et la disposition respectives de chaque faisceau à rayonnement (11) émis, le récepteur (2) comportant une ligne de capteur avec une seule rangée d'éléments de détection (3) disposés les uns à côté des autres, de manière à ce que chacun corresponde à une partie du champ de vision, le système optique (4, 5, 6) comprenant une lentille cylindrique (6), le système optique étant **caractérisé en ce que** l'axe du cylindre de la lentille cylindrique (6) est disposé de manière parallèle à la rangée de capteurs, de manière à ce que le système optique (4, 5, 6) produise une anamorphose du champ de vision (8, 17, 23, 33) transmis au récepteur (2), le rayonnement détecté dans chacune des parties du champ de vision étant absorbé par l'élément de détection du récepteur correspondant, indépendamment du lieu où l'impulsion des faisceaux à rayonnement frappent les parties du champ de vision (9).

2. Dispositif selon la revendication 1, **caractérisé en ce que** l'émetteur (10) balaye de manière séquentielle le champ de vision (8, 17, 33).

3. Dispositif selon la revendication 2, **caractérisé en ce que** l'émetteur (10) comprend un dispositif à miroir servant à diffuser les faisceaux à rayonnement (11) dans des directions différentes.

4. Dispositif selon la revendication 1, **caractérisé en ce que** l'émetteur (10) est configuré de manière à couvrir simultanément le champ de vision (23) avec les faisceaux d'impulsions à rayonnement (11) émis dans des directions différentes.

5. Dispositif selon l'une des revendications 1 à 4, **caractérisé en ce que** l'impulsion des faisceaux à rayonnement (11) qui couvre le champ de vision (17, 23) est en forme d'anneau.

6. Dispositif selon l'une des revendications 1 à 5, **caractérisé en ce que** l'impulsion de faisceaux à rayonnement (11) est orientée vers les bords du champ de vision (17, 23).

7. Dispositif selon l'une des revendications 1 à 6, **caractérisé en ce que** l'intensité de l'impulsion des faisceaux à rayonnement (11) varie en fonction de l'orientation de l'impulsion des faisceaux à rayonnement (11).
